# EUROPÄISCHE PATENTSCHRIFT

(11) **EP 2 143 548 B1**
(45) Veröffentlichungstag und Bekanntmachung des Hinweises auf die Patenterteilung: **17.05.2023**
(21) Anmeldenummer: 09164427.8
(22) Anmeldetag: 02.07.2009
(51) Int. Cl.: B29C 51/02, B29C 51/10, B29C 51/14, B32B 27/30, B32B 27/32, B32B 27/36, B41M 1/30

(54) **Verfahren zum Herstellen von thermoplastisch geformten Anordnungen und Folienanordnung**
Process of manufacturing of thermoplastically formed arrangements and corresponding foils arrangement
Processus de fabrication d'arrangements thermoplastique formé et l'arrangement des feuilles correspondantes

(30) Priorität: 07.07.2008 DE 102008031616
(43) Veröffentlichungstag der Anmeldung: 13.01.2010
(73) Patentinhaber: PACCOR Packaging GmbH, 40468 Düsseldorf (DE)
(72) Erfinder: Altenburg, Gerd, 37073, Göttingen (DE); Karjalainen, Jarmo, 13500, Hämeenlinna (FI); Lahtela, Juhani, 12400, Tervakoski (FI)
(74) Vertreter: König Szynka Tilmann von Renesse Patentanwälte Partnerschaft mbB Düsseldorf

(56) Entgegenhaltungen:
- WO-A1-2007/006006
- DE-A1- 10 235 266
- DE-A1- 10 350 787
- DE-A1-102005 062 352
- JP-A- H04 158 025
- US-A- 5 366 791

## Beschreibung

Die Erfindung bezieht sich auf ein Verfahren zum Herstellen von thermoplastisch geformten Anordnungen aus Kunststofffolien.

Beim Herstellen von thermoplastisch geformten Anordnungen werden oftmals mehrlagige und/oder bedruckte Kunststofffolien eingesetzt, die anschließend tiefgezogen werden.

Problematisch ist es dabei jedoch, daß beim Tiefziehen Abfall entsteht. Die eingesetzte Folie muss immer größer gewählt werden, um ein gutes und beständiges Tiefziehergebnis sicherzustellen. Der verbleibende Rand wird durch Stanzen oder Schneiden entfernt. Da diese Ränder mehrere Materialien enthalten und/oder auch Druckfarben enthalten sind, ist eine Wiederverwertung nur sehr eingeschränkt möglich.

Zudem besteht das erhebliche Problem, daß alle bekannten und vor allem im Lebensmittelbereich einsetzbaren Druckfarben dazu neigen, insbesondere beim Thermoformen abgerieben zu werden, so daß diese sich auf der Innenseite der späteren Verpackung absetzen können und so in das Lebensmittel gelangen können. Dies ist besonders bei Metallisierungen und Farben bzw. Beschichtungen mit einem Metallanteil nicht erlaubt, zumal diese noch leichter abgerieben werden.

Des Weiteren wurden in der Vergangenheit oftmals problematische Kaschierkleber und/oder Haftvermittler eingesetzt um die Folienanordnungen zusammenzufügen. Diese sind jedoch besonders im Hinblick auf Kosten und Arbeitsaufwand und auch im Hinblick auf Lebensmittelechtheit und Trennbarkeit problematisch.

Es wurden in der Vergangenheit auch Versuche unternommen, einzelne Folienschichten durch Siegelschichten, also Schichten, die aus einem Siegelmaterial bestehen zu ersetzen und so auf Kaschierklebstoffe und Haftvermittler zu verzichten. Dies bedingt jedoch eine erhebliche Einschränkung bei der Materialauswahl, die nicht erwünscht ist.

DE 10 2005 062 352 A1 betrifft ein Verfahren zur Herstellung eines Formteillaminats mit mehrschichtigem Aufbau und dreidimensionaler Form, welches sich insbesondere für die Herstellung von Möbeln, dekorativen Elementen, Hohlraumkanälen, Automobilzubehör und dergleichen eignet, wobei ein zumindest im Wesentlichen plattenförmiges Werkstoffteil mit mehrschichtigem Aufbau zu dem Formteillaminat insbesondere mittels Thermoformen umgeformt wird, wobei das Werkstoffteil mindestens einen umformbaren, insbesondere thermoformbaren Träger und mindestens ein dem Träger zugeordnetes, insbesondere textiles Flächenmaterial aufweist. Das Flächenmaterial wird während der Umformung des Werkstoffteils auf den Träger auflaminiert, derart, dass der Träger und das Flächenmaterial während der Umformung auf- und/oder gegeneinander verschoben werden und nach Beendigung der Umformung das Formteillaminat resultiert, bei dem das Flächenmaterial und der Träger unverschiebbar miteinander verbunden sind.

US5366791 A offenbart die Herstellung eines Kunststoffmaterialaufbaus, dessen Kern starr ist. Die Deckfolien werden mittels Kaschierklebern auf den starren Kern auflaminiert.

Aufgabe der Erfindung ist es, ein Verfahren vorzuschlagen, das es ermöglicht, nach Bedarf Folienanordnungen zusammenzustellen und Bedruckungen auszuwählen. Dabei muß sichergestellt sein, daß die Druckfarben, Beschichtungen und/oder Metallisierungen nicht abgerieben und in das Lebensmittel gelangen können. Zudem ist es wünschenswert, wenn anfallende Reste wieder sortenrein verwertet werden können

Diese Aufgabe wird erfindungsgemäß durch die Merkmale des Anspruchs 1 gelöst.

Hierdurch wird es ermöglicht, kurz vor der thermoplastischen Verformung die Folienschichten miteinander in Kontakt zu bringen.

Dabei hat es sich als sehr vorteilhaft erwiesen, wenn auf der Folienanordnung und/oder zwischen den Folienschichten eine Bedruckung vorgesehen wird.

Eine zwischen den Folienschichten angebrachte Bedruckung ist keinem Abrieb ausgesetzt. Zusätzlich kann jedoch eine Oberflächenbedruckung vorgesehen sein.

Eine weitere sehr vorteilhafte Ausgestaltung liegt auch dann vor, wenn die Bedruckung vor dem Zusammenfügen der Folienanordung und/oder vor dem thermoplastischen Verformen und/oder eine außenliegende Bedruckung auch nach dem Verformen angebracht wird.

So lassen sich sehr kurzfristig und direkt vor dem Formen dem thermoplastischen Verformen Bedruckungen anbringen, die dennoch geschützt sind. Das Anbringen von Metallisierungen oder dergleichen wird ebenfalls ermöglicht.

Sehr vorteilhaft ist es auch, wenn die Folienschichten in adhäsiven Kontakt zueinander gebracht werden.

Durch das Zusammenführen werden die Folienschichten nicht fest miteinander verbunden, vielmehr weisen diese nur eine geringe Adhäsion aneinander auf. Vielmehr wird die zwischen den Folienschichten befindliche Luft bei Zusammenführung fertiger Folienlagen entfernt. Aber auch eine Extrusionsbeschichtung bzw. Extrusionskaschierung kann so ausgeführt werden, ohne bei an sich schlecht verträglichen Materialien unerwünschte Haftvermittler oder Kaschierkleber benutzen zu müssen. Es ist auch denkbar, daß die Folienschichten auch wieder mit geringem Kraftaufwand voneinander getrennt werden können. Erst durch die thermoplastische Umformung werden die Schichten miteinander so verbunden, daß diese gut aneinander haften und sich nicht voneinander lösen. Abgetrennte Reste des Tiefziehmaterials können so sehr leicht wieder voneinander getrennt werden und können getrennt einer Wiederverwertung zugeführt werden.

Es hat sich erfindungsgemäß als äußerst vorteilhaft erwiesen, wenn die Folienschichten beim thermoplastischen Verformen miteinander fest verbunden werden.

Durch die beim thermoplastischen Verformen und die dabei stattfindende Verpressung und wenigstens partiell auftretenden Streckungen werden die Folienschichten verbunden und eine ausreichende Haftung erzeugt. Gerade in bedruckten Bereichen war bislang keine ausreichende Haftung sicherstellbar. Durch das erfindungsgemäße Verfahren wird aber auch in diesen Bereichen eine gute Haftung erzielt. Je nach Druckfarbe bzw. Lack werden variierende Haftungen erzielt. Die Variierung kann beispielsweise durch eine abgestufte Pigmentierung der Druckfarbe erfolgen. Beim Verformen der Folienanordnung können auch Mikrorisse in der Bedruckung bzw. im Lack auftreten, durch die die Folienschichten wieder in direkten Kontakt gelangen können, wodurch die Haftung nochmals verbessert werden kann. Diese Mikrorisse sind optisch nicht störend.

Sehr vorteilhaft ist es erfindungsgemäß auch, wenn die thermoplastische Verformung als Tiefziehverfahren ausgeführt wird.

Tiefziehverfahren sind weit verbreitet, so daß hier keine Neuentwicklung auf Maschinenseite notwendig ist.

Eine weitere sehr vorteilhafte Ausgestaltung der Erfindung liegt auch dann vor, wenn wenigstens ein Teil der Folienschichten aus einem Polyolefin, insbesondere einem Polyethylen, Polypropylen und/oder Polystyrol, PET, APET, PVC, PLA oder einem anderen auch biologisch abbaubaren und/oder auf nachwachsenden Rohstoffen basierenden Kunststoff und deren Mischungen bzw. Blends gefertigt wird.

Mit all diesen Materialien wurden sehr gute Ergebnisse erzielt. Besonders PP in verschiedensten Abmischungen ist ein gebräuchlicher Rohstoff für Lebensmittelverpackungen.

Als äußerst vorteilhaft hat es sich erwiesen, wenn die thermoplastische Verformung bei PP bei 140 bis 165°C ausgeführt wird.

In diesem Temperaturbereich wird einerseits eine gute Verformbarkeit beobachtet und andererseits eine sehr gute Haftung der Folienschichten aneinander erreicht, die der von mit Haftvermittlern oder Kaschierklebern verbundener Folienschichten gleichwertig ist. Aufgrund des abweichenden Schmelzverhaltens sind die Temperaturen bei anderen Materialien entsprechend angepasst auszuwählen.

Sehr vorteilhaft ist es auch, wenn die Verformung bei einem Pressdruck von 0 bis 15 bar, vorzugsweise zwischen 0 und 10 bar, besonders vorteilhaft von 3 bis 8 bar, vorzugsweise bei 5 bis 6 bar oder bei einem Unterdruck zwischen 0 und 1 bar ausgeführt wird.

Ebenfalls sehr vorteilhaft ist es auch, wenn die Verformungszeit 0,5 bis 5 Sekunden, vorzugsweise bei Polypropylen 1,5 bis 5 Sekunden beträgt und eine Kühlzeit von 0,2 bis 1,5 Sekunden, vorzugsweise bei Polypropylen von 0,5 bis 1,5 Sekunden eingehalten wird, die in der Verformungszeit eingeschlossen ist.

Durch die Einhaltung der genannten Verfahrensparameter wird eine sehr gute Verbindung der Folienschichten erzielt, die zum Beispiel beim Formen von Bechern, Schalen oder Deckeln auch benötigt wird.

Die Erfindung ist weiterhin in Anspruch 7 definiert.

Hierdurch wird die Bedruckung, Bemalung, der Lackauftrag und/oder eine Metallisierung geschützt und verhindert, daß Bestandteile hiervon sich an anderer Stelle ablagern können und/oder direkt in das verpackte Lebensmittel gelangen können.

Sehr vorteilhaft ist es dabei, wenn zwischen 0 und 100% PP Homopolymer, vorzugsweise zwischen 45 und 55% oder zwischen 75 und 85% PP Homopolymer, vorzugsweise 50% oder 80% PP Homopolymer vorgesehen sind.

Mit Anteilen an PP Homopolymer wurden sehr gute Ergebnisse erzielt.

Dabei ist es sehr vorteilhaft, wenn dem PP Homopolymer ein weiterer Anteil aus PP Copolymer zugefügt ist, das bis zum fehlenden Anteil auf 100% zugesetzt sein kann. Ebenfalls ist es gemäß einer weiteren Ausgestaltung der Erfindung sehr vorteilhaft, wenn wenigstens einem Teil der Folienschichten Antistatika, Füllmittel, Nukleierungsmittel, Antiblockzusätze, Gleitstoffe, Verarbeitungshilfsstoffe, Farbpigmente auch in Form von Masterbatches zugefügt sind.

Hierdurch lassen sich leicht verarbeitbare Gegenstände schaffen, die auch besondere optische Eigenschaften aufweisen können. So ist es beispielsweise denkbar, daß unter einer transparenten oder aber auch teilweise opaken, milchigen bzw. transparent farbigen Oberflächenfolie eine Bedruckung angeordnet ist, die auf einer opaken Unterfolienschicht angeordnet ist. Denkbar ist es dabei auch, daß auf der anderen Seite der Unterfolienschicht eine weitere Bedruckung angeordnet sein kann, die ihrerseits wiederum durch eine Deckfolie abgedeckt sein kann. Die Oberfolie, Deckfolie oder auch Unterfolie kann als Barriereschicht ausgebildet sein.

Es ist desweiteren gemäß einer Fortbildung der Erfindung auch sehr vorteilhaft, wenn wenigstens ein Teil der Folienschichten selbst aus einem Coextrudat besteht.

Dabei ist es auch sehr vorteilhaft, wenn zwischen den Folienschichten eine niedrig schmelzende Schicht, ein Heißsiegellack oder dergleichen vorgesehen ist.

Damit lassen sich auch vorgefertigte Folien sicher miteinander zum Beispiel über Temperierwalzen leicht aneinander haftend miteinander verbinden. Die endgültige Verbindung erfolgt wieder beim Verformen.

Eine weitere sehr vorteilhafte Ausgestaltung liegt auch dann vor, wenn wenigstens eine Außensicht der Anordnung wenigstens teilweise transparent ausgebildet ist.

Damit wird eine sehr gute Lesbarkeit sichergestellt.

Im folgenden wird die Erfindung anhand eines Ausführungsbeispiels veranschaulicht.

Dabei zeigen:
- Fig. 1: die Bildung einer Folienanordnung zum Tiefziehen,
- Fig. 2: das Tiefziehen der Folienanordnung zu einem Deckel und das Abtrennen von überschüssigem Material, und
- Fig. 3: das Trennen des abgetrennten Materials zur Wiederverwertung.

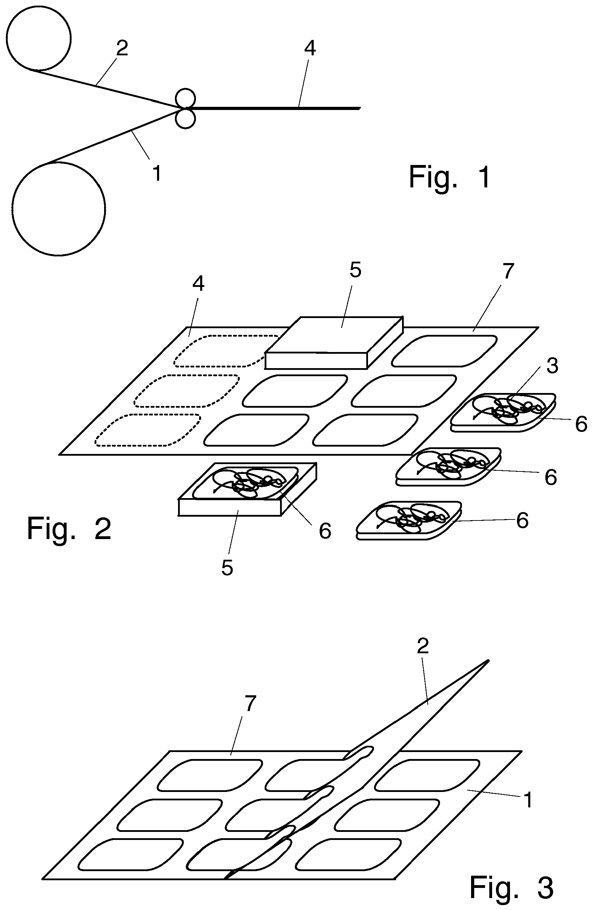

Mit 1 ist in Fig. 1 eine Basisfolie aus einem Polypropylen bezeichnet. Diese Basisfolie 1 wird mit einer Deckfolie 2 zusammengebracht, die fertig zuläuft und die auf der der Basisfolie 1 zugewandten Seite mit einer Bedruckung 3 versehen ist. Die beiden Folien 1 und 2 werden über eine Anpresswalze zusammengefügt, so daß diese aneinander anhaften, indem zwischen den Folien 1 und 2 enthaltene Luft wenigstens weitgehend entfernt wird. Die Anhaftung der beiden Folien 1 und 2 aneinander ist jedoch gering. Es wird eine Folienanordnung 4 gebildet, die anschließend einer Tiefziehvorrichtung 5 zugeführt werden, die aus der Folienanordnung 4 Schalen 6 oder andere räumlich geformte Gegenstände erzeugt.

Es ist aber auch denkbar, daß eine Basisfolie 1 oder eine Deckfolie 2 aus einem Polyolefin bedruckt wird und anschließend die bedruckte Seite im Extrusionsbeschichtungs- oder -kaschierungsverfahren mit einer weiteren Folienschicht abgedeckt wird.

Damit wird eine abgedeckte Bedruckung oder Metallisierung erzeugt, die durch eine Folienschicht insbesondere gegen Abrieb geschützt ist.

Dabei kann die zunächst vorgesehene Folie 1 bzw. 2 entweder dick oder dünn ausgestaltet sein und der Materialauftrag entsprechend ausgerichtet sein.

Die fertige Folie oder aber auch die aufextrudierte Beschichtung kann auch als Barriereschicht vorgesehen sein und aus entsprechendem Barrierematerial gegen Sauerstoff, Wasserdampf oder anderen Stoffen bestehen.

Die Folienanordnung 4 ist breiter als der zu erzeugende Deckel 6, so daß beim Tiefziehen ein Rand 7 bestehen bleibt, der durch ein in der Tiefziehvorrichtung 5 angebrachtes, nicht näher dargestelltes Stanzwerkzeug vom Deckel 6 getrennt wird, bei mehreren gleichzeitig tiefgezogenen Deckeln 6 entstehen auch mehrere Ränder 7, die ebenfalls von dem Stanzwerkzeug abgetrennt werden.

Es ist denkbar, daß der getrennte Rand 7 vom Deckel 6 weggeführt wird und automatisch oder manuell wieder in die Folien 1 und 2 getrennt wird. Hierzu ist es denkbar, daß nach anfänglicher manueller Trennung getrennte Haspeln für die beiden Folien 1 und 2 vorgesehen sind. Anschließend können die Reste der Folie 1 wieder der ursprünglichen Folienextrusion zugefügt werden.

Beim Tiefziehen des Deckels 6 werden die Folienschichten 1 und 2 durch den Verformungsprozess, insbesondere durch den dabei auftretenden Druck und durch Streckungen fest miteinander verbunden. Die Umformdrücke liegen meist im Bereich zwischen 3 und 8 bar. Durch diesen hohen Druck werden auch kleinste Unebenheiten der Folienschichten 1 und 2 und der Bedruckung 3 genutzt um diese regelrecht miteinander zu verhaken. Zudem treten durch die beim Tiefziehen auftreneden Streckungen optisch nicht störende Mikrorisse in der Bedruckung 3 auf, durch die hindurch ein Zusammenhalt zwischen den Folienschichten 1 und 2 erzeugt wird. Wichtig ist dabei auch, daß eine Temperatur zwischen 140 und 165°C insbesondere bei Folienschichten aus Polypropylen eingehalten wird, da bei diesen Temperaturen eine der Verbindung förderliche Erweichung der Folienschichten erzielt wird.

Es ist aber auch denkbar, daß die Verformung im Vakuumverfahren oder bei anderen Drücken erfolgt. Diese können auch von den miteinander zu verbindenden Materialien und den eingesetzten Druckfarben bzw. Lacken abhängig sein.

Die meisten Folien weisen auf ihren beiden Oberseiten einen unterschiedlichen Glanzgrad auf. Durch das Zusammenfügen zweier Folien, bei denen jeweils die einen höheren Glanzgrad aufweisende Seite nach außen gerichtet ist, weist ingesamt einen sehr hohen Glanz und auch eine sehr hohe Transparenz auf. Die beiden nach innen gerichteten matteren Seiten verlieren durch das Verpressen beim Verformen ihre Mattigkeit.

Es sind auch andere Gestaltungen mit eingefärbten oder mit definierter Opazität versehenen Deckschichten denkbar. Perlmutteffekte oder dergleichen lassen sich so einfach realisieren.

Es ist auch denkbar, daß sowohl auf der Innenseite als auch auf der Außenseite des Deckels 6 eine Bedruckung vorgesehen ist. Eine oder beide können durch eine Deckschicht abgedeckt sein.

Zwischen den Folienschichten 1 und 2 ist weder ein Haftvermittler noch ein Kaschierkleber vorgesehen. Vielmehr werden die Folienschichten nur physikalisch miteinander verbunden. Dieses Verbinden geschieht durch das Tiefziehen. Um die Erweichung im langsamer aufwärmenden Kern der Folienanordnung zu verbessern, kann eine niedrig schmelzende Schicht oder ein Siegellack vorgesehen werden, welche die Verbindung der Folienschichten zu verbessern vermögen.

Eine vorgesehene Bedruckung oder Metallisierung oder dergleichen ist wirksam geschützt und vermag das zu verpackende Lebensmittel nicht zu kontaminieren.

Die mechanische Verbindung mag zwar nicht so stabil sein, wie eine mit einem Kaschierkleber geschaffene Verbindung, jedoch ist diese völlig ausreichend und es wird dadurch auch die Möglichkeit eröffnet, die für die Schale verwendeten Materialien nach Gebrauch wieder voneinander zu trennen.

Beim Tiefziehen muss für eine gute Verbindung der Schichten 1 und 2 eine Verformungszeit zwischen 0,5 und 5 Sekunden, bei PP vorzugsweise zwischen 1,5 und 5 Sekunden und eine Kühlzeit zwischen 0,2 und 1,5 Sekunden, bei PP zwischen 0,5 und 1,5 Sekunden eingehalten werden. Für andere Materialien können diese Zeiten ebenso variieren wie die anzuwendenden Verformungstemperaturen und die Verformungsdrücke.

Durch den Verzicht auf Kaschierkleber und Haftvermittler werden nicht nur Materialkosten gespart. Vielmehr wird auch die Handhabung erheblich erleichtert.

Zum Beispiel können die beiden Folienschichten 1 und 2 völlig getrennt voneinander gefertigt werden. Ebenso ist eine Inline-Extrusionsbeschichtung bzw. -kaschierung beim Bedrucken einer Folie denkbar. Die Deckschicht 2 ist im üblichen erheblich dünner als die Basisschicht 1. Durch das späte Zusammenbringen der beiden Schichten kann flexibel auf Dekor und Beschriftungsänderungen reagiert werden. Die einzelnen Folienschichten weisen meistens eine Dicke zwischen 20 und 90 µm auf, bei PP zwischen 50 und 70 µm, können aber bei anderen Materialien variieren. Es ist beispielsweise denkbar, daß die Schichtdicken bei steiferen Materialien reduziert werden.

Meistens werden die dünneren Deckschichten 2 bedruckt. Gerade bei amorphen Kunststoffen wie zum Beispiel APET kann aber auch die dickere Basisschicht bedruckt werden und diese dann extrusionsbeschichtet werden. Hierdurch wird ein durch die auftretenden Temperaturen bedingter Schrumpf wirksam vermieden.

Außerdem ist es auch möglich, eigentlich unverträgliche Folienschichten 1 und 2 miteinander auf diese Art und Weise zu verbinden. Durch die physikalische Verbindung der Folienschichten haften auch diese eigentlich unverträglichen Materialien aneinander, ohne daß es dem Einsatz aufwendiger Verfahren und teurer Haftvermittler bedarf. Es sind Aufbauten denkbar, die eine Folienlage aus PE mit einer Folienlage aus PP kombinieren.

Der Verzicht auf Kaschierkleber und Haftvermittler ist auch gerade im Bereich von Lebensmittelverpackungen sehr vorteilhaft. Einerseits fällt dadurch die Notwendigkeit des Nachweises der nötigen Unbedenklichkeit weg. Andererseits wird aber auch die Wahrscheinlichkeit, daß diese Substanzen in die Lebensmittel gelangen können beseitigt.

Zudem wird eine Inline-Extrusionsbeschichtung bzw. -kaschierung erheblich erleichter bzw. erst ermöglicht.

Für die Folienschichten haben sich Polypropylen, insbesondere als Homopolymer und Copolymer in unterschiedlichen Mischungsverhältnissen als sehr vorteilhaft erwiesen. Polypropylen Homopolymer kann beispielsweise zwischen 0 und 100% vorgesehen sein, wobei sich zwischen 45 und 55%, insbesondere 50% und zwischen 75 und 85%, insbesondere 80% als besonders gut geeignet erwiesen haben. Der Rest ist dabei vorteilhafter weise durch Polypropylen Copolymer ergänzt.

Der Einsatz von Hilfsstoffen ist denkbar.

Es ist aber auch denkbar, daß Polyethylen, PLA oder auch andere thermoplastisch verformbare, insbesondere tiefziehbare Kunststoffe wie zum Beispiel PS, APET eingesetzt werden können.

Die Folien 1 und 2 sollten nicht gereckt sein um einen Schrumpf beim Zusammenfügen des Folienaufbaus zu vermeiden.

## Patentansprüche

1. Verfahren zum Herstellen von thermoplastisch geformten Anordnungen aus Kunststofffolien, wobei
eine aus wenigstens zwei Schichten bestehende Folienanordnung (4) durch Zusammenführen zweier fertiger Folien, durch Extrusionsbeschichtung, Extrusionskaschierung, Coextrusion ohne Einsatz von herkömmlichen Haftvermittlern oder Kaschierklebern gebildet wird, und daß die Folienschichten (1, 2) bei einer anschließenden thermoplastischen Verformung miteinander verbunden werden,
wobei zwischen den Folienschichten (1, 2) eine Bedruckung (3) vorgesehen wird,
wobei die Folienschichten (1, 2) in adhäsiven Kontakt zueinander gebracht werden,
wobei die Folienschichten (1, 2) beim thermoplastischen Verformen miteinander fest verbunden werden,
wobei die thermoplastische Verformung als Tiefziehverfahren ausgeführt wird,
wobei die abgetrennten Reste des Tiefziehmaterials leicht voneinander getrennt und einer getrennten Wiederverwertung zugeführt werden können.

2. Verfahren nach Anspruch 1, **dadurch gekennzeichnet, daß** die Bedruckung (3) vor dem Zusammenfügen der Folienanordung (4) und/oder vor dem thermoplastischen Verformen und/oder eine außenliegende Bedruckung (3) auch nach dem Verformen angebracht wird.

3. Verfahren nach einem der vorangehenden Ansprüche, **dadurch gekennzeichnet, daß** wenigstens ein Teil der Folienschichten (1, 2) aus einem Polyolefin, insbesondere einem Polyethylen, Polypropylen, und/oder Polystyrol, PET, APET, PVC, PLA oder einem anderen auch biologisch abbaubaren und/oder auf nachwachsenden Rohstoffen basierenden Kunststoff und deren Mischungen bzw. Blends gefertigt wird.

4. Verfahren nach einem der vorangehenden Ansprüche, **dadurch gekennzeichnet, daß** die thermoplastische Verformung bei PP bei 140 bis 165°C ausgeführt wird.

5. Verfahren nach einem der vorangehenden Ansprüche, **dadurch gekennzeichnet, daß** die Verformung bei einem Pressdruck von 3 bis 15 bar, vorzugsweise zwischen 3 und 10 bar, besonders vorteilhaft von 3 bis 8 bar, vorzugsweise bei 5 bis 6 bar ausgeführt wird.

6. Verfahren nach einem der vorangehenden Ansprüche, **dadurch gekennzeichnet, daß** die Verformungszeit 0,5 bis 5 Sekunden, vorzugsweise bei Polypropylen 1,5 bis 5 Sekunden beträgt und eine Kühlzeit von 0,2 bis 1,5 Sekunden, vorzugsweise bei Polypropylen von 0,5 bis 1,5 Sekunden eingehalten wird, die in der Verformungszeit eingeschlossen ist.

7. Verwendung einer Folienanordnung (4) bei einem Verfahren nach einem der vorangehenden Ansprüche, **dadurch gekennzeichnet, daß** die aus wenigstens zwei Schichten bestehende Folienanordnung (4) ohne Einsatz von herkömmlichen Haftvermittlern oder Kaschierklebern zusammengesetzt und daß zwischen den Schichten eine Bedruckung, Bemalung, Lackauftrag und/oder Metallisierung vorgesehen ist.

8. Verwendung nach Anspruch 7, **dadurch gekennzeichnet, daß** eine Polypropylenschicht zwischen 45 und 100% PP Homopolymer, vorzugsweise zwischen 45 und 55% oder zwischen 75 und 85% PP Homopolymer, vorzugsweise 50% oder 80% PP Homopolymer vorgesehen sind.

9. Verwendung nach Anspruch 8, **dadurch gekennzeichnet, daß** dem PP Homopolymer ein weiterer Anteil aus PP Copolymer zugefügt ist, das bis zum fehlenden Anteil auf 100% zugesetzt sein kann.

10. Verwendung nach Anspruch 7, 8 oder 9, **dadurch gekennzeichnet, daß** wenigstens einem Teil der Folienschichten (1, 2) Antistatika, Füllmittel, Nukleierungsmittel, Antiblockzusätze, Gleitstoffe, Verarbeitungshilfsstoffe, Farbpigmente auch in Form von Masterbatches zugefügt sind.

11. Verwendung nach einem der Ansprüche 7 bis 10, **dadurch gekennzeichnet, daß** wenigstens ein Teil der Folienschichten (1, 2) selbst aus einem Coextrudat besteht.

12. Verwendung nach einem der Ansprüche 7 bis 11, **dadurch gekennzeichnet, daß** zwischen den Folienschichten (1, 2) eine niedrig schmelzende Schicht, ein Heißsiegellack vorgesehen ist.

13. Verwendung nach einem der Ansprüche 7 bis 12, **dadurch gekennzeichnet, daß** wenigstens eine Außensicht der Anordnung wenigstens teilweise transparent ausgebildet ist.

## Claims

1. Method of manufacturing thermoplastically shaped assemblies from plastic foils,
wherein a foil assembly (4) consisting of at least two layers is formed by bringing together two finished foils, by extrusion coating, extrusion laminating, coextrusion without using conventional bonding agents or laminating adhesives, and that the foil layers (1, 2) are joined together during subsequent thermoplastic forming,
wherein printing (3) is provided between the foil layers (1, 2),
wherein the foil layers (1, 2) are brought into adhesive contact with each other,
wherein the foil layers (1, 2) are securely joined during the thermoplastic forming,
wherein the thermoplastic forming is performed as a deep-drawing method,
wherein the cut-off remnants of the deep-drawing material can be easily separated from each other and supplied to a separate recycling.

2. Method according to Claim 1, **characterized in that** the printing (3) is applied prior to assembling the foil assembly (4) and/or prior to the thermoplastic forming and/or external printing (3) is also applied after forming.

3. Method according to one of the previous claims, **characterized in that** at least some of the foil layers (1, 2) are made from a polyolefin, in particular a polyethylene, polypropylene, and/or polystyrene, PET, APET, PVC, PLA or any other plastic, which may also be biodegradable and/or based on renewable raw materials, and their mixtures or blends.

4. Method according to one of the previous claims, **characterized in that**, for PP, the thermoplastic forming is performed at 140 to 165 °C.

5. Method according to one of the previous claims, **characterized in that** the forming is performed at a forming pressure of 3 to 15 bar, preferably between 3 and 10 bar, particularly advantageously from 3 to 8 bar, preferably at 5 to 6 bar.

6. Method according to one of the previous claims, **characterized in that** the forming time is 0.5 to 5 seconds, preferably, for polypropylene, 1.5 to 5 seconds, and a cooling time of 0.2 to 1.5 seconds, preferably, for polypropylene, of 0.5 to 1.5 seconds, which is included in the forming time, is maintained.

7. Use of a foil assembly (4) in a method according to one of the previous claims, **characterized in that** the foil assembly (4) consisting of at least two layers is assembled without using conventional bonding agents or laminating adhesives and that printing, painting, lacquering and/or metallisation is provided between the layers.

8. Use according to Claim 7, **characterized in that** a polypropylene layer between 45 and 100% PP homopolymer, preferably between 45 and 55 % or between 75 and 85 % PP homopolymer, preferably between 50 % or 80 % PP homopolymer are provided.

9. Use according to Claim 8, **characterized in that** a further percentage of PP copolymer is added to the PP homopolymer, which may be added up to the missing percentage to 100 %.

10. Use according to Claim 7, 8 or 9, **characterized in that** antistatic agents, fillers, nucleating agents, anti-block additives, lubricants, processing aids, colour pigments, also in the form of master batches, are added to at least some of the foil layers (1, 2).

11. Use according to one of Claims 7 to 10, **characterized in that** at least some of the foil layers (1, 2) themselves consist of a coextrudate.

12. Use according to one of Claims 7 to 11, **characterized in that** a low-melting layer, a heat-seal lacquer is provided between the foil layers (1, 2).

13. Use according to one of Claims 7 to 12, **characterized in that** at least one external layer of the assembly is configured to be at least partially transparent.

## Revendications

1. Procédé de fabrication d'agencements moulés thermoplastiques constitués de feuilles plastiques, dans lequel un agencement de feuilles (4) constitué de deux feuilles est formé en assemblant deux feuilles finies, par revêtement par extrusion, laminage par extrusion, coextrusion sans utilisation de promoteurs d'adhérence ou d'adhésifs de laminage conventionnels, et en ce que les couches de feuilles (1, 2) sont reliées les unes aux autres lors d'une déformation thermoplastique ultérieure,
dans lequel une impression (3) est prévue entre les couches de feuilles (1, 2),
dans lequel les couches de feuilles (1, 2) sont mises en contact adhésif les unes avec les autres,
dans lequel les couches de feuilles (1, 2) sont solidement reliées les unes aux autres lors de la déformation thermoplastique,
dans lequel la déformation thermoplastique est réalisée sous la forme d'un processus d'emboutissage profond,
dans lequel les restes séparés du matériau d'emboutissage profond sont facilement séparés les uns des autres et peuvent être recyclés séparément.

2. Procédé selon la revendication 1, **caractérisé en ce que** l'impression (3) est appliquée avant l'assemblage de l'agencement de feuilles (4) et/ou avant la déformation thermoplastique et/ou une impression externe (3) est également appliquée après la déformation.

3. Procédé selon une quelconque des revendications précédentes, **caractérisé en ce qu'**au moins certaines des couches de feuille (1, 2) sont constituées d'une polyoléfine, en particulier un polyéthylène, polypropylène, et/ou polystyrène, PET, APET, PVC, PLA ou d'un autre plastique biodégradable et/ou à base de matières premières renouvelables et des mélanges ou combinaisons de ceux-ci.

4. Procédé selon une quelconque des revendications précédentes, **caractérisé en ce que** la déformation thermoplastique du PP a lieu à 140 à 165°C.

5. Procédé selon une quelconque des revendications précédentes, **caractérisé en ce que** la déformation a lieu à une pression de 3 à 15 bars, de préférence entre 3 et 10 bars, particulièrement avantageusement de 3 à 8 bars, de préférence à 5 à 6 bars.

6. Procédé selon une quelconque des revendications précédentes, **caractérisé en ce que** la durée de déformation est de 0,5 à 5 secondes, de préférence de 1,5 à 5 secondes pour le polypropylène, et une durée de refroidissement de 0,2 à 1,5 secondes, de préférence de 0,5 à 1,5 secondes pour le polypropylène, qui est incluse dans la durée de déformation, est respectée.

7. Utilisation d'un agencement de feuilles (4) dans un procédé selon une des revendications précédentes, **caractérisé en ce que** l'agencement de feuilles (4) constitué d'au moins deux couches est assemblé sans utilisation de promoteurs d'adhérence ou d'adhésifs de laminage conventionnels et qu'une impression, une peinture, une application de laque et/ou une métallisation est prévue entre les couches.

8. Utilisation selon la revendication 7, **caractérisée en ce qu'**une couche de polypropylène entre 45 et 100% PP homopolymère, de préférence entre 45 et 55% ou entre 75 et 85% PP homopolymère, de préférence 50% ou 80% PP homopolymère est prévue.

9. Utilisation selon la revendication 8, **caractérisée en ce qu'**une proportion supplémentaire de PP copolymère est ajoutée au PP homopolymère, laquelle peut être aj outée jusqu' à la proportion manquante à 100 %.

10. Utilisation selon la revendication 7, 8 ou 9, **caractérisée en ce que** des agents antistatiques, des charges, des agents de nucléation, des additifs antiblocs, des lubrifiants, des adjuvants de fabrication, des pigments de couleur sont ajoutés à au moins certaines des couches de feuille (1, 2) également sous forme de mélanges maîtres.

11. Utilisation selon une quelconque des revendications 7 à 10, **caractérisée en ce qu'**au moins certaines des couches de feuille (1, 2) sont elles-mêmes constituées d'un coextrudat.

12. Utilisation selon une des revendications 7 à 11, **caractérisée en ce qu'**une couche à bas point de fusion, une laque thermosoudable est prévue entre les couches de feuilles (1, 2).

13. Utilisation selon une quelconque des revendications 7 à 12, **caractérisée en ce qu'**au moins une vue extérieure de l'agencement a une configuration au moins partiellement transparente.
